# NEW EUROPEAN PATENT SPECIFICATION

(11) **EP 0 516 107 B2**
(45) Date of publication and mention of the opposition decision: **22.12.1999**
(45) Mention of the grant of the patent: 20.09.1995
(21) Application number: 92108989.2
(22) Date of filing: 27.05.1992
(51) Int. Cl.: A23L 1/0522, A23L 1/24

(54) **Use of starch as a fat and oil substitute in foodstuffs**
Verwendung von Stärke als Fett- und Öl-Ersatz in Nahrungsmitteln
Utilisation de l'amidon comme substitut de graisses et d'huiles dans les aliments

(30) Priority: 27.05.1991 DE 4117327
(43) Date of publication of application: 02.12.1992
(73) Proprietor: CPC INTERNATIONAL INC., Englewood Cliffs New Jersey 07632-9976 (US)
(72) Inventor: Melwitz, Axel, W-7101 Untergruppenbach-Unterheinriet (DE); Spitzfaden, Karl, W-7105 Leingarten (DE); Seewi, Gila, W-7100 Heilbronn (DE); Stute, Rolf, Dr., W-7101 Flein (DE)
(74) Representative: Lederer, Franz, Dr.

(56) References cited:
- EP-A- 0 110 549
- EP-A- 0 149 258
- EP-A- 0 403 696
- EP-A- 0 420 315
- EP-A- 0 427 310
- CH-A- 371 674
- FR-A- 2 248 791
- FR-A- 2 661 317
- US-A- 3 515 591
- US-A- 3 583 874
- US-A- 3 692 543
- US-A- 3 956 515
- US-A- 4 280 851
- US-A- 4 623 549
- US-A- 4 634 596
- FOOD SCIENCE AND TECHNOLOGY DATABASE AN=88:9210 DN=88-07-M0147, INTERNATIONAL FOOD INFORMATION SERVICE, Berkshire Reading, GB Waring, S.:"Shortening replacement in cakes" &FOOD TECHNOLOGY, Vol.42, no. 3 1988 pages 114, 116-117
- Product Brochure Ultra-Tex 2
- Lebensmittel-Lexikon 1981
- Das Grosse Lebensmittel-Lexikon 1981
- Food Trade Review, July 1989
- Staley Brochure "Salad Dressings", May 1989
- Prepared Foods, February 1991
- Staley Brochure "Frostings & Fillings" June 1988
- Food Processing, November 1985
- Food Engineering, February 1990
- Prepared Foods, May 1991
- Food Technology, December 1994

## Description

For several decades the excessive consumption of fat and the accompanying cardiovascular diseases, in addition to cancer which is sometimes connected to excessive fat consumption, constitutes one of the most essential dangers to one's health.

Hence, there exists an increasing demand for reduced calorie or, reduced fat products. Emulsions represent a product group, where in most cases it is very difficult to reduce the fat content without losing the typical product properties. Moreover, emulsions such as mayonnaise, dressings, dips etc. often comprise egg yolk and thus are additionally rich in cholesterol. Due to the excellent texture and taste carrier properties the amount of fat has increased considerably, in particular, in "gourmet cuisine", for example, in creamy soups and cream dressings. On the whole, there does exist a need for reduced fat, low cholesterol or cholesterol-free emulsions with otherwise unmodified product properties.

With respect to such efforts two basically different approaches must be distinguished. One approach which has been particularly popular in the past few years, constitutes the substitution for fats and oils by components equally good in functional properties, but which are indigestible. A particularly well-known example is the sucrose polyesters which have become known by the term "olestra". Just like the fats themselves, these fat replacers can be used for the production of oil-in-water or water-in-oil emulsions as well as for frying, roasting, baking, etc. These fat substitutes are predominantly produced by chemical synthesis and are virtually indigestible. Although this provides the desired calorie reduction, some problems result due to the fact that these fat replacers are excreted in the feces in unmodified form.

Therefore, due to the unpleasant side effects which may occur, quite a number of other approaches have been tried to reduce the fat content of foodstuffs. In this connection, particular emphasis has been placed on a method of solution that is subsumed under the term "fat mimics". It is not just an attempt to simply replace the fat by another, equal component with the same physical properties, but the amount of fat in the respective products is reduced as well and other ingredients, such as carbohydrate, protein or plant gums are used for the restoration of the properties typical of the product. In this manner, one can imitate the functional properties of a food with a high fat content with good results.

In the past two decades in addition to various plant gum combinations, for example, two methods of solution based on whey protein and/or potato starch have been developed. These include the whey protein product SIMPLESS, in which a protein capable of swelling in the outer layers but otherwise available in globular form is capable of simulating a fat emulsion ("Fat Substitute for Dairy and Oil-based Products", Food Technology, April 1988, 96). Additionally, starch hydrolyzates have been used which exhibit the pasty consistency and mouth feel which come close to fat emulsions. (Schierbaum et al. "Herstellung, Eigenschaften und Anwendung gelbildender Stärkehydrolysenprodukte" ((Production, Properties and Application of Gel-Forming Starch Hydrolysis Products")), Deutsche Lebensmittel-Rundschau 1977, 390; DE-OS 23 05 494; DE-OS 23 65 850; Bulpin et al. "Thermally-Reversible Gels from low DE Maltodextrins" in Gums and Stabilisers for the Food Industry 2, Pergamon Press, 1984, p. 475 et seq.; product information Snowflake (R) Maltodextrin VN 136, Maizena Industrieprodukte GmbH; product information Paselli SA2 of AVEBE Veendam-Holland, 1986; Brando et al. "Struktur und eigenschaften von Maltodextrin-Hydrogelen" ((Structure and Properties of Maltodextrin Hydrogels")) Starke 31 (1979) 188-194; EP-A 327 288; US-P 4 510 166).

Of course, products based on high-molecular carbohydrates are of particular interest in view of our diets which on the whole are too rich in fat and protein, because the high-molecular carbohydrates can contribute to increasing the carbohydrate amount in our diets, which, constitutes an advantage over the first-cited fat substitutes which replace fat but otherwise do not influence the carbohydrate-protein ratio. Unfortunately, these products, of which today several thousand tons have already been produced and applied, have a disadvantage in that the thermally-reversible gels necessary for the fat substitution are formed only at concentrations of at least 20%, often even 40%. Hence, there continues to exist a need for starch based fat replacers which make an effective fat substitution possible at lower concentrations.

Surprisingly, it has now been found that specific cold-swelling, granular starches can, to a very high degree, replace fats in emulsions and, in terms of taste, consistency and mouth feel, yield products which are comparable with products rich in fats.

Such cold-swelling, granular starches are known. They are produced according to special methods, in which pre-pasting of the starch is carried out in such a manner that swelling and baking together of the starch grains are prevented and thus individual (i.e. granular) pre-pasted (i.e. cold-swelling) starch grains are obtained. This is in contrast to the common methods of producing cold-swelling starches such as drum drying or extrusion. In the best-known method of producing the desired granular, cold-swelling starches pre-pasting is carried out in an alcohol/water mixture, wherein the water content is adjusted such that it is sufficient solely for pre-pasting of the starch grain present in the suspension, and swelling of the grain and pasting of the individual grains related thereto does not take place. Formation of a paste and/or a gel is thus prevented and cold-swelling starches with unmodified outer grain shape and size are obtained.

Methods for the production of cold-swelling, granular starches are described in US Patent No. 3,583,874 and EP-A 110 549. As can be gathered from the citations, this method was developed for the production of such starches which are suited for the preparation of cold-stirring puddings, particularly, puddings that form gels that are firm and keep their shape when turned out of their molds, previously only obtained by the cooking of the starches.

It has been surprisingly found that such cold-swelling, granular starches are also excellently suited for the production of low-fat emulsions which, despite their low fat content, have a smooth structure and mouth feel which are similar to products containing high fat contents.

Moreover, as compared to the above cited starch hydrolyzates, much lower concentrations of the cold-swelling, granular starches are possible, so that an essential calorie reduction in such emulsions is also achieved.

Compared to the starch hydrolysis products, granular, cold-swelling starches have an additional advantage, in that products which exhibit excellent functional and sensory properties can be produced without the simultaneous addition of modified starches or plant gums.

Modified starches have already been used as fat substitutes for the production of reduced fat foodstuffs such as dressings, mayonnaise-like sauces and salad creams; cf. Seyfried; "Kohlenhydrate als Fett- und Öl-Ersatzstoffe" ("Carbohydrates as Fat and Oil Substitutes") ZFL 41 (1990) 103-106. Such fat substitutes are produced, for example, from manihot starches and are commercially available under the term "N-Oil" (cf. product information N-Oil of the National Starch & Chemical). N-Oil is a manihot dextrin produced by heating manihot starch in the presence of hydrochloric acid (Susan M. Lee: "Fat Substitutes - a literature survey" April 1989, The British Food Manufacturing Industries Research Association). Such chemically modified starches for the use in foodstuffs are clearly distinguishable from the present invention.

The present invention claims the sole use of a non-chemically modified cold-swelling, granular starch, which is obtainable by pre-gelatinization in an alcohol/water mixture, in which the water content is so adjusted that it is sufficient to allow the pre-gelatinization of the suspended starch granules but without swelling of the granules or sticking of the individual grains to one another, as fat and oil substitute in fat-reduced, cold-produced foodstuff emulsions of the kind of mayonnaise, salad dressing and dips. Dips and similar products have been known under the term "dressing", to describe pasty mayonnaise-like preparations having a fat content of less than 50%.

According to the present invention, cold-swelling, granular starches are claimed which are particularly suited for the production of fat-reduced emulsions, particularly, for the production of emulsions such as mayonnaise, salad dressings, dips and similar products which have been known under the term "dressing", to describe pasty mayonnaise-like preparations having a fat content of less than 50%.

The cold-swelling, granular starches of the present invention are particularly suited for the production of industrial fix products which only contain the starch as well as condiments and/or other taste-giving or taste-influencing ingredients and which, in pre-portioned dried mixtures, can be offered for the production of emulsions in homes or large-scale catering establishments. Such fix products or kitchen aids may then be processed to yield the finished product by using readily available ingredients, such as any edible oil and other liquids such as milk or yogurt.

The cold-swelling, granular starch of this invention may be used in a broad ratio to the fat or oil component. In general, the starch to oil ratio lies in the range of from about 4:1 to about 1:25, preferably from about 2:1 to about 1:15.

In most cases, particularly for the formation of emulsions, the cold-swelling, granular starch will be used in small amounts generally at an amount of from about 2 to about 12 percent by weight, preferably from about 3 to about 7 percent by weight, of the total product. Thus, the cold-swelling, granular starches to be used in accordance with the invention are characterized by an especially good yield, and can be used at much lower levels; generally at less than half of the usual amounts for starch hydrolyzates.

Due to the use of cold-swelling, granular starches according to the invention, foodstuffs having a greatly reduced fat or oil content can be produced. The products produced according to the invention can be prepared with a fat and/or oil content of from 10 to 66 percent by weight, preferably only 15 to 50 percent by weight. In particular, mayonnaise-like products which comprise only 4 to 7 percent by weight of cold-swelling, granular starch and which also exhibit a reduced fat content of 15 to 30 percent by weight can be produced.

On the whole, the use of cold-swelling, granular starches as claimed in low fat emulsions results in a number of advantages:
1. Products having a particularly low fat content can be produced. Moreover, they may also be cholesterol free when using non-cholesterol containing ingredients.
2. Products have an essentially smoother consistency and a structure which more closely resembles rich products. Additionally, they are less sticky than the starch hydrolyzates with low DE values, which are also produced on a starch basis.
3. It does not pertain to a chemically modified starch but solely to a physically modified starch.
4. It pertains to a system relying solely on starch. The use of chemically modified starches or of gums is not necessary and may even result in a deterioration of the texture.
5. In most cases, the emulsions that can be produced in this manner are compounded in a very simple way in terms of formulation. In addition to the components of oil and starch and the taste-giving ingredients (vinegar, condiment etc.) only readily available ingredients are used, eg. milk, yogurt, tomato paste, etc. In particular, ingredients subject to declaration usually do not show up on the list of ingredients in the case of such products.
6. In the applications described herein, the starches show a particularly time-independent consistency; subsequent thickening, frequently observed in many other starches, is virtually not present (cf. example 2).
7. The emulsions produced in accordance with the invention can be produced cold (instant products).
8. Contrary to starch hydrolyzates which normally yield satisfactory product properties, such as stability and sensory properties, only in combination with chemically modified starches, plant gums etc., additives are not necessary when using the starches according to the invention.
9. The claimed starches are particulurly suited for the production of so-called kitchen aids or "fix products", that is products containing all of the ingredients necessary to obtain an optimum taste profile (in this case, a mixture of the granular, cold-swelling starch with condiments etc.) and to which all that has to be added are readily available components (in this case, oil, milk, yogurt etc.). For example, stir dried mixture into the oil and add milk and remaining oil.

### Example 1

### Cold-Produced Sauce (of the Mayonnaise Type):

10g of a granular, cold-swelling maize starch and 10g of a spice mix (mustard powder, malic acid, wine powder, onion powder, citric acid, lemon fruit powder, curcuma, pepper aroma, pineapple fruit powder, Worchestershire condiment) were dispersed in 50ml maize oil and 150ml milk was added by using an eggbeater.

After 5 minutes the sauce produced in this manner has reached its final viscosity, which does not change even not after several days of storage.

The sauce produced in this manner has a very smooth structure, the typical gloss of mayonnaise and a fat content of only 25%. Moreover, it is free from cholesterol.

### Example 2

### Cold-Produced Sauce (of The Mayonnaise Type) With Different Fat Content

Analogously to example 1, corresponding sauces were produced with 40, 20, and 10ml oil instead of with 50ml maize oil, without showing a decisive modification of the characteristic product properties.

This example shows that the oil content can be varied in broad ranges as long as there exists a starch/oil ratio guarantying the dispersibility of the starch.

### Example 3

### Fat-Reduced Mayonnaise:

A fat-reduced mayonnaise was produced according to a recipe that is recommended for the commercial starch hydrolyzate produced according to DOS 2305494, however, instead of 80g starch hydrolyzate 25g of the granular, cold-swelling starch according to the invention were used.

### Production Specification:

262g water, 30g egg yolk, 15g sugar, 4g table salt and 10g mustard were homogenized in the mixer of an electric kitchen machine and bit by bit 25g of the granular, cold-swelling starch according to the invention were added. Subsequently, 120g maize oil was added, homogenized one more time (2 min), 15g edible vinegar was added with the motor on and kept in the refrigerator for 2 hours until the final consistency had been reached.

The fat-reduced mayonnaise produced in this manner had a fat content of 25%, and exhibited the typical gloss of mayonnaise, the smooth structure of mayonnaise, and the agreeable, mayonnaise-like consistency (mouth feel). In consideration of the slow cooling process in the refrigerator, which takes about 4 hours, and in consideration of the viscosity increase resulting from the cooling process, the product reached its final consistency shortly after production and did not change even when staying in the refrigerator for longer periods.

| Cooling Time | Temperature | Penetrometer Value |
|---|---|---|
| 1 hour | 22°C | 122 |
| 2 hour | 18°C | 126 |
| 3 hour | 15°C | 139 |
| 4 hour | 9°C | 167 |

The cholesterol content corresponded to the egg yolk used and when using cholesterol-free and/or reduced cholesterol egg yolk may be reduced accordingly. The caloric content amounts to 1215kJ/100g.

### Comparative Example 2

Analogously, a calorie-reduced mayonnaise was produced with the commercial starch hydrolyzate intended for this formulation, in addition to the proposed concentration of 80g, which in comparison to a standard mayonnaise means a calorie reduction of 60%, however, also with 60g starch hydrolyzate.

Both products produced with the starch hydrolyzate were still liquid after 4 hours in the refrigerator. Penetrometer measurements were not possible in connection with these products. The Bostwick viscosities (measuring time: 5 sec.) were 14cm for the 80g-product after 1 hour in the refrigerator and 11.5cm after 4 hours. Thus, these products called for much longer refrigeration time until the final viscosity has been achieved.

The product also contained an oil content of just under 25% and also exhibited similar fat properties, however, not the typical character of a mayonnaise but a consistency more similar to fats used to spread on bread etc. or sandwich spreads and, in particular, a sticky mouth feel. The caloric content of these products amounted to 1225 and/or 1234kJ/100g.

### Example 4

### Salad Mayonnaise

200ml maize oil, 170ml water, 10g egg powder, 20g granular, cold-swelling maize starch, 20g spice mix consisting of 13% sugar, 13% table salt, 5% mustard powder, 5% wine vinegar extract, 3.2% glutamate, 1.8% onion powder, 2.7% malic acid, 2.7% white wine powder, 1.4% citric acid, 0.15% pepper, 0.008% egg yolk pigment and 0.016% paprika oil.

Analogously to example 1, the mixture consisting of starch, egg powder and spices was thoroughly stirred by means of an eggbeater or hand-mixer (stage 1) in 50ml oil, then water and the remaining oil were added under constant agitation. The salad mayonnaise produced in this manner had a fat content of 50% and exhibited the typical gloss of mayonnaise and the properties characteristic of mayonnaise (smooth mouth feel, creamy, smooth consistency).

### Example 5

A. Fix Product for Mayonnaise
   A mixture was produced of 5g cold-swelling, granular starch, 2.7g salt, 2.25g sugar, 0.6g mustard oil concentrate, 0.2g citric essence (corresponding to about 30% acid) and 2.16g vinegar essence (corresponding to about 25% acid). The mixture produced in this way was mixed with half of 125ml soybean oil by means of a hand mixer (stage 1). Subsequently, first the egg (about 55 g) and then the remaining oil were added at stage 3.
   The product had a fat content of 63% and had the typical gloss and structure of mayonnaise.
B. Fix Product for Sauce a la Hollandaise
   64g of a dried mixture consisting of 64% granular, cold-swelling starch, 14% salt, 10% sugar, 4.4% sodium glutamate, 2.5% onion powder as well as 5.5% of a mixture consisting of pepper essence, citric acid, lemon powder, Worcester aroma, curcuma swelling starch, dried vinegar and condiment were mixed with 200g butterfat and salad oil, the ratio of butterfat to salad oil had been chosen such that the result was a sufficiently firm but also sufficiently doseable paste. By adding 300ml water it was possible to produce a Sauce a la Hollandaise with this paste, which was analogous to the one described above.

### Example 6

### Cold Sauce on Yogurt Basis

10g of a granular, cold-swelling maize starch and 10g of a spice mixture analogous to example 1 (however, having a lower amount of acid with respect to the acid available in the yogurt) were dispersed in 50ml maize oil and 150ml yogurt were added by means of using an eggbeater. This sauce, too, reached its final consistency within a few minutes, and the exhibited typical gloss and structure of mayonnaise.

Buttermilk, kefir etc. may be used in a similar manner as the yogurt, only the seasoning will have to be harmonized with the respective flavor of the ingredient used.

## Claims

1. Sole use of a non-chemically modified cold-swelling, granular starch, which is obtainable by pre-gelatinization in an alcohol/water mixture, in which the water content is so adjusted that it is sufficient to allow the pre-gelatinization of the suspended starch granules but without swelling of the granules or sticking of the individual grains to one another, as fat and oil substitute in fat-reduced, cold-produced foodstuff emulsions of the kind of mayonnaise, salad dressing and dips.

2. Use according to claim 1 at a ratio of the starch to the fat and/or oil components of from 4:1 to 1:25, preferably from 2:1 to 1:15.

3. Use according to one of the previous claims at an amount of from 2 to 12, preferably from 3 to 7 percent by weight of the total product.

4. Use according to one of the previous claims for the production of emulsions having a fat and/or oil content of from 10 to 60, preferably from 15 to 50 percent by weight.

5. Use according to claim 1 at an amount of from 4 to 7 percent by weight of the starch of the total product for the production of emulsions having a fat and/or oil content of from 15 to 30 percent by weight.

## Patentansprüche

1. Alleinige Verwendung einer nicht-chemisch modifizierten, kaltquellenden, granulären Stärke, die erhältlich ist durch Vorgelatinieren in einer Alkohol/Wasser-Mischung, in der der Wassergehalt so eingestellt wird, daß es ausreicht, um das Vorgelatinieren der suspendierten Stärkegranulen zu ermöglichen, ohne daß jedoch die Granulen aufquellen oder die einzelnen Körnchen untereinander verkleben, als Fett- und Öl-Ersatzstoff in fettreduzierten, kalt hergestellten Nahrungsmittelemulsionen wie Mayonnaise, Salatsauce und Dips.

2. Verwendung gemäß Anspruch 1 bei einem Verhältnis der Stärke zu den Fett- und/oder Ölkomponenten von 4:1 bis 1:25, vorzugsweise von 2:1 bis 1:15.

3. Verwendung gemäß einem der vorhergehenden Ansprüche in einer Menge von 2 bis 12, vorzugsweise von 3 bis 7 Gewichtsprozent des Gesamtprodukts.

4. Verwendung gemäß einem der vorhergehenden Ansprüche zur Herstellung von Emulsionen mit einem Fett- und/oder Ölgehalt von 10 bis 60, vorzugsweise von 15 bis 50 Gewichtsprozent.

5. Verwendung gemäß Anspruch 1 in einer Menge von 4 bis 7 Gewichtsprozent der Stärke des Gesamtprodukts zur Herstellung von Emulsionen mit einem Fett- und/oder Ölgehalt von 15 bis 30 Gewichtsprozent.

## Revendications

1. Utilisation exclusive d'un amidon granulaire gonflant à froid, non modifié chimiquement, qui peut être obtenu par prégélatinisation dans un mélange alcool/eau, dans laquelle la teneur en eau est ajustée de telle sorte qu'elle soit suffisante pour permettre la prégélatinisation des granules d'amidon en suspension, mais sans gonflement des granules ou collage des différents grains les uns aux autres, comme agent de remplacement des matières grasses et de l'huile dans des émulsions de denrées alimentaires à teneur réduite en matières grasses, produits à froid, du type de la mayonnaise, des assaisonnements pour salades et des sauces pour repas légers.

2. Utilisation suivant la revendication 1, en un rapport de l'amidon à la matière grasse et/ou l'huile utilisées compris dans l'intervalle d'environ 4:1 à environ 1:25, de préférence d'environ 2:1 à environ 1:15.

3. Utilisation suivant une des revendications précédentes, en une quantité de 2 à 12, de préférence de 3 à 7 % en poids du produit total.

4. Utilisation suivant l'une des revendications précédentes, pour la production d'émulsions ayant une teneur en matières grasses et/ou en huile de 10 à 60, de préférence de 15 à 50 % en poids.

5. Utilisation suivant la revendication 1 en une quantité de 4 à 7 % en poids de l'amidon du produit total pour la production d'émulsions ayant une teneur en matières grasses et/ou en huile de 15 à 30 % en poids.
